(19) Europäisches Patentamt
European Patent Office
Office européen des brevets

(11) **EP 3 594 624 B1**

(12) **EUROPÄISCHE PATENTSCHRIFT**

(45) Veröffentlichungstag und Bekanntmachung des Hinweises auf die Patenterteilung:
**29.11.2023 Patentblatt 2023/48**

(51) Internationale Patentklassifikation (IPC):
**G01C 22/00** (2006.01)    **G01P 3/38** (2006.01)
**G06T 7/246** (2017.01)

(21) Anmeldenummer: **19179365.2**

(22) Anmeldetag: **11.06.2019**

(52) Gemeinsame Patentklassifikation (CPC):
**G01P 3/68; G01C 22/00; G01P 3/38; G06T 7/269;**
G06T 2207/10016; G06T 2207/20084;
G06T 2207/30241; G06T 2207/30248

(54) **VERFAHREN ZUR WEGSTRECKENMESSUNG SOWIE SYSTEM ZUR WEGSTRECKENMESSUNG**

METHOD FOR MEASURING DISTANCE, AND SYSTEM FOR MEASURING DISTANCE

PROCÉDÉ DE MESURE DE L'ITINÉRAIRE AINSI QUE SYSTÈME DE MESURE DE L'ITINÉRAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2018 DE 102018211329**

(43) Veröffentlichungstag der Anmeldung:
**15.01.2020 Patentblatt 2020/03**

(73) Patentinhaber: **Robert Bosch GmbH**
**70442 Stuttgart (DE)**

(72) Erfinder:
• **Raproeger, Dirk**
**31515 Wunstorf (DE)**
• **Herzog, Paul Robert**
**31137 Hildesheim (DE)**
• **Torres Lopez, Lidia Rosario**
**53225 Bonn (DE)**
• **Brosch, Uwe**
**31141 Hildesheim (DE)**
• **Lauer, Paul-Sebastian**
**30175 Hannover (DE)**

(56) Entgegenhaltungen:
EP-A1- 3 040 726          WO-A1-2006/063546
WO-A1-2007/091072     WO-A1-2012/168424
WO-A1-2017/015947     DE-A1-102016 223 435
DE-A1-102017 108 255

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung betrifft ein Verfahren zur Wegstreckenmessung.

Die Erfindung betrifft weiter ein System zur Wegstreckenmessung.

### Stand der Technik

Obwohl die vorliegende Erfindung allgemein auf beliebige Systeme zur Wegstreckenmessung anwendbar ist, wird die vorliegende Erfindung in Bezug auf eine optische Wegstreckenmessung mittels einer Kamera bei einem Fahrerassistenzsystem beschrieben.

Optische Systeme zur Wegstreckenmessung werden beispielsweise im Bereich von Fahrerassistenzsystemen verwendet. Hierbei wird beispielsweise davon ausgegangen, dass sich das optische System in einer konstanten Höhe über eine Oberfläche bewegt. Durch Beobachtung des Bodens, beispielsweise mittels aufgenommener Bilder zu unterschiedlichen Zeitpunkten, mittels einer Kamera und anhand der Höhe der Kamera über den Boden kann die zurückgelegte Wegstrecke ermittelt werden.

Die Schrift DE 10 2016 223 435 A1 offenbart eine Wegstrecken- und Geschwindigkeitsmessung mit Hilfe von Bildaufnahmen, insbesondere zum Ermitteln einer zurückgelegten Wegstrecke eines spurgebundenen Fahrzeugs.

Das Dokument EP 3 040 726 A1 offenbart ein Verfahren zur Bestimmung einer Fahrzeuggeschwindigkeit, wobei anhand mindestens einer oder mehrerer Differenzen in den Bilddaten die Bewegungsgeschwindigkeit und/oder Richtung des Fahrzeugs ermittelt wird.

Das Dokument WO 2012/168424 A1 offenbart ein Verfahren zum Lokalisieren und/oder Messen der Geschwindigkeit von einem Fahrzeug, das entlang einer aus zwei Schienen gebildete Eisenbahnschiene fährt.

Die Schrift WO 2006/063546 A1 offenbart ein Verfahren zur Ermittlung einer

Geschwindigkeit eines Fahrzeugs, wobei mindestens zwei Bilder einer Fahrzeugumgebung mittels einer Monokamera des Fahrzeugs zeitlich nacheinander aufgenommen und zwischen den Bildern Veränderungen einer Lage und/oder einer Größe mindestens eines in den Bildern enthaltenen Objektes ermittelt werden und aus den Veränderungen eine Geschwindigkeit des Fahrzeugs relativ zu dem Objekt ermittelt wird.

Die Schrift WO 2007/091072 A1 offenbart ein System zur Geschwindigkeitsmessung und/oder zur Positionsbestimmung eines Zuges.

### Offenbarung der Erfindung

In einer Ausführungsform stellt die Erfindung ein Verfahren zur Wegstreckenmessung bereit, umfassend die Schritte

- Aufnehmen von zumindest zwei zeitlich sequentiellen Bildern mittels einer berührungslos sensierenden Sensoreinrichtung,
- Zuordnen von semantischen Informationen zu zumindest einem Bildbereich in den zumindest zwei Bildern,
- Auswählen zumindest eines Teilbereichs in einem oder mehreren Bildbereichen der zumindest zwei Bilder, der für eine Wegstreckenermittlung geeignet ist, anhand der zugeordneten semantischen Informationen,
- Ermitteln des optischen Flusses anhand des zumindest einen ausgewählten Teilbereichs in den zumindest zwei Bildern und
- Ermitteln der zurückgelegten Wegstrecke anhand des ermittelten optischen Flusses.

In einer weiteren Ausführungsform stellt die Erfindung ein System zur Wegstreckenmessung bereit, umfassend eine berührungslos sensierende Sensoreinrichtung zum Aufnehmen von zumindest zwei zeitlich sequentiellen Bildern, eine Semantikeinheit zum Zuordnen von semantischen Informationen zu zumindest einem Bildbereich in den zumindest zwei Bildern, eine Selektionseinheit zum Auswählen zumindest eines Teilbereichs in den Bildbereichen der zumindest zwei Bilder, der für eine Wegstreckenermittlung geeignet ist, anhand der zugeordneten semantischen Informationen, eine Flusseinheit zum Ermitteln des optischen Flusses anhand des zumindest einen ausgewählten Teilbereichs in den zumindest zwei Bildern, und eine Wegmesseinheit zum Ermitteln der zurückgelegten Wegstrecke anhand des ermittelten optischen Flusses.

Einer der damit erzielten Vorteile ist, dass eine aufwändige Identifikation von Störungen im letztlich zur Verfügung stehenden Messsignal zur Wegstreckenermittlung vermieden werden kann. Ein weiterer Vorteil ist die schnelle und zuverlässige Ermittlung einer Wegstrecke.

Weitere Merkmale, Vorteile und weitere Ausführungsformen der Erfindung sind im Folgenden beschrieben oder werden dadurch offenbar.

Gemäß einer vorteilhaften Weiterbildung werden zum Ermitteln des optischen Flusses mehrere Teilbereiche in den Bildbereichen der zumindest zwei Bilder verwendet. Auf diese Weise werden mehrere Teilbereiche ausgewählt, die sich besonders für eine Wegstreckenmessung eignen, was die Zuverlässigkeit bei der Ermittlung der Wegstrecke erhöht.

Erfindungsgemäß erfolgt das Zuordnen von semantischen Informationen zu verschiedenen Bildbereichen mittels eines künstlichen neuronalen Netzes. Dies erlaubt eine schnelle und zuverlässige Zuweisung von semantischen Informationen zu verschiedenen Bildbereichen.

Erfindungsgemäß wird der zumindest eine Teilbereich ausgewählt, der eine Bodenebene in den Bildern zeigt. Damit wird die Zuverlässigkeit und Genauigkeit bei der Wegstreckenmessung verbessert.

Gemäß einer weiteren vorteilhaften Weiterbildung erfolgt das Bereitstellen der aufgenommenen Bilder digital, wobei das Zuordnen der semantischen Informationen bereichsweise, vorzugsweise pixelgenau erfolgt. Als Bereiche sind hier Approximationen, wie zum Beispiel eine Bestimmung von Polygonen, die Bereiche im Bild abgrenzen und/oder die Bereiche mit semantischer Information belegen möglich. Dies erhöht weiter die Zuverlässigkeit und Robustheit der Ermittlung der Wegstrecke, insbesondere die pixelgenaue semantische Information.

Erfindungsgemäß wird die zurückgelegte Wegstrecke anhand einer Höhe der berührungslos sensierenden Sensoreinrichtung über einer Bodenebene, des ermittelten optisches Flusses und anhand der Brennweite der berührungslos sensierenden Sensoreinrichtung ermittelt. Dies erlaubt eine schnelle und gleichzeitig einfache Ermittlung einer Wegstrecke. Erfindungsgemäß wird die berührungslos sensierende Sensoreinrichtung mit einer Kamera bereitgestellt. Mittels einer Kamera ist eine zuverlässige Aufnahme von Bildern möglich. Hierbei kann eine Infrarotkamera und/oder auch eine Kamera im sichtbaren Wellenlängenbereich bereitgestellt werden.

Erfindungsgemäß umfasst die berührungslos sensierende Sensoreinrichtung zumindest einen optischen Sensor, erfindungsgemäß ist der optische Sensor eine Kamera, insbesondere eine Nahfeld-Digitalkamera. Damit können auf einfache und schnelle Weise Zeitsequenzen von Bildern bereitgestellt werden.

Erfindungsgemäß weist die Semantikeinheit ein künstliches neuronales Netz auf, insbesondere ein faltendes neuronales Netz. Damit wird eine besonders zuverlässige Erkennung von semantischen unterschiedlichen Bereichen in den Bildern ermöglicht.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

## Kurze Beschreibung der Zeichnungen

Dabei zeigt

Figur 1    ein System gemäß einer Ausführungsform der vorliegenden Erfindung;

Figur 2    ein aufgenommenes Bild versehen mit semantischen Informationen gemäß einer Ausführungsform der vorliegenden Erfindung;

Figur 3    in schematischer Form eine Projektionsvorschrift für eine Kamera gemäß einer Ausführungsform der vorliegenden Erfindung; und

Figur 4    Schritte eines Verfahrens gemäß einer Ausführungsform der vorliegenden Erfindung.

## Ausführungsformen der Erfindung

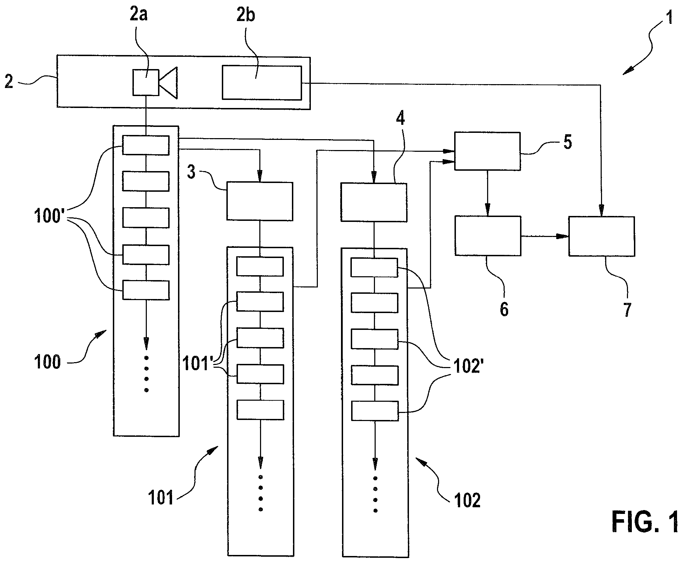

Figur 1 zeigt ein System gemäß einer Ausführungsform der vorliegenden Erfindung.

In Figur 1 ist ein System 1 mit einer optischen Sensoreinrichtung 2 gezeigt, umfassend eine Kamera 2a und eine Kalibrierungseinheit 2b. Mittels der Kamera 2a werden Bilder 100' zeitlich hintereinander aufgenommen, sodass sich eine Eingangsbildfolge 100 ergibt. Die Eingangsbildfolge 100 wird zum einen an ein neuronales Netz 3 übermittelt, welches eine Zuordnung von semantischen Informationen zu den Bildern 100' der Eingangsbildfolge 100 vornimmt und eine semantische Bildfolge 101 mit Bildern 101' mit hinzugefügten semantischen Informationen erstellt. Die Eingangsbildfolge 100 wird weiter einer Flusseinheit 4 übermittelt, die den optischen Fluss in den Bildern 100' der Eingangsbildfolge 100 ermittelt. Die Flusseinheit 4 ermittelt dann Bilder 102' aus der Eingangsbildfolge 100, die den optischen Fluss wiedergeben; es wird also eine optische Flussbildfolge 102 erstellt.

Basierend auf der semantischen Bildfolge 101 und der optischen Flussbildfolge 102 ermittelt dann eine Bodenauswahleinheit 5 entsprechende Bereiche in den Bildern, die einen Boden, eine Bodenebene oder dergleichen zeigen. Die Bodenauswahleinheit 5 übermittelt die Bilder an eine Bodenflusseinheit 6, die anhand der entsprechenden Bereiche in den Bildern den optischen Fluss auf den Boden, den Bodenfluss, ermittelt. Der Bodenfluss wird zusammen mit Informationen der Kalibrierungseinheit 2b, beispielsweise die Höhe der Kamera 2a über dem Boden, an eine Wegstreckenermittlungseinheit 7 übermittelt, die dann die zurückgelegte Wegstrecke anhand der ihr übermittelten Informationen ermittelt.

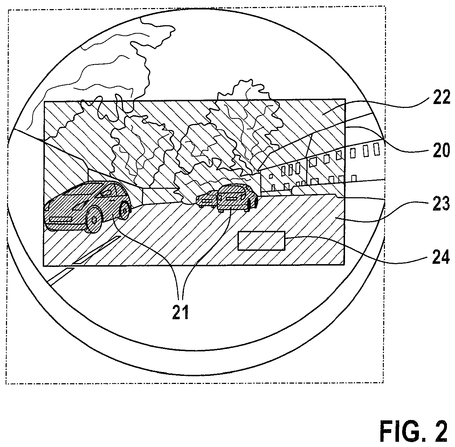

Figur 2 zeigt ein aufgenommenes Bild versehen mit semantischen Informationen gemäß einer Ausführungsform der vorliegenden Erfindung.

Im Detail ist in Figur 2 ein mittels einer Kamera aufgenommenes Bild gezeigt, welches die Umgebung im Wesentlichen vor einem Fahrzeug zeigt. Im Bild sind unter anderem andere Fahrzeuge, Häuser, Bäume und ein Parkplatz sowie eine Straße zu sehen. Die Semantikeinheit 3 in Form des neuronalen Netzes wertet nun einen Bereich 20 aus, der mit semantischen Informationen versehen wird, was in Figur 2 mittels unterschiedlicher Schraffur in dem Bereich 20 kenntlich gemacht ist. So sind die Fahrzeuge 21, ein Bodenbereich 23, und die weitere Umgebung 22 unterschiedlich schraffiert. Selbstverständlich ist auch eine andere Kenntlichmachung möglich, beispielsweise durch verschiedene Farben oder dergleichen. Der Bodenbereich 23 kann weiterhin in kleinere Teilbereiche 24 unterteilt sein. Insbesondere die Nutzung des Nahbereichs einer Kamera erhöht die Robustheit des Systems und kann zur Ermittlung eines Teilbereichs 24 herangezogen werden.

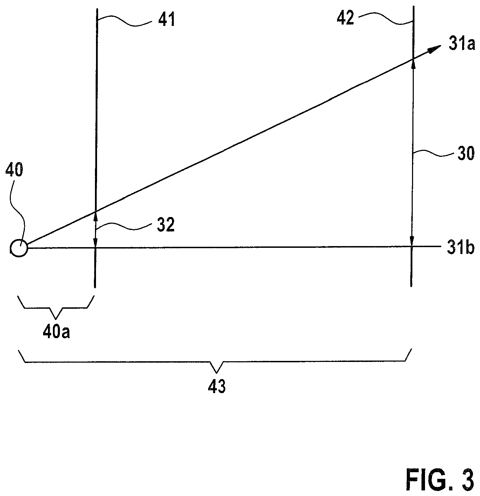

Figur 3 zeigt in schematischer Form eine Projektionsvorschrift für eine Kamera gemäß einer Ausführungsform der vorliegenden Erfindung.

In Figur 3 ist das Prinzipschema zur Ermittlung einer Wegstrecke gezeigt. Eine Kamera in einem Projektionszentrum 40 weist einen Sichtstrahl 31b auf, der sich immer in die optische Achse der Kamera legen lässt. Damit kann der Strahlensatz einer perspektivischen Kamera zur Ermittlung einer Wegstrecke verwendet werden. Eine Kamera im Projektionszentrum 40 nimmt entlang der Sichtstrahlen 31a, 31b zu unterschiedlichen Zeiten Bilder auf. Die Sichtstrahlen 31a, 31b überstreichen dabei den Boden (Bodenebene 42). Anhand von der Kamera aufgenommener Bilder lässt sich in den Bildern in der Bildebene 41 der optische Fluss 32 bestimmen. Mittels der Brennweite 40a der Kamera und der Höhe 43 der Kamera über der Bodenebene 42 lässt sich die zurückgelegte Wegstrecke 30 dann mittels des Strahlensatzes ermitteln. Mit anderen Worten wird durch Vergleich zweier aufeinanderfolgender Bilder der optische Fluss und daraus anhand des Strahlensatzes der zurückgelegte Weg bestimmt. Als optischer Fluss werden insbesondere Korrespondenzen zwischen den beiden Bildern zu dem jeweils physikalisch gleichen Ort bezeichnet.

Die Wegstrecke kann dabei über die Formel

$$\overrightarrow{Wegstrecke} = \frac{Kamerah\ddot{o}he * \overrightarrow{optischer\ Fluss}}{Brennweite}$$

ermittelt werden.

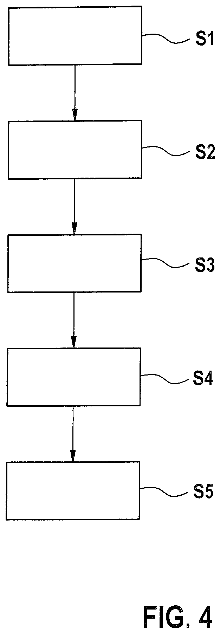

Figur 4 zeigt Schritte eines Verfahrens gemäß einer Ausführungsform der vorliegenden Erfindung.

In Figur 4 sind Schritte eines Verfahrens zur Wegstreckenmessung mittels eines Systems gezeigt.

Dabei erfolgt in einem ersten Schritt S1 ein Aufnehmen von zumindest zwei zeitlich sequentiellen Bildern 100 mittels einer optischen Sensoreinrichtung 2, 2a.

In einem weiteren Schritt S2 erfolgt ein Zuordnen von semantischen Informationen 21, 22, 23 zu zumindest einem Bildbereich 20 in den zumindest zwei Bildern.

In einem weiteren Schritt S3 erfolgt ein Auswählen zumindest eines Teilbereichs 24 in einem oder mehreren Bildbereichen in den zumindest zwei Bildern 101, der für eine Wegstreckenermittlung geeignet ist, anhand der zugeordneten semantischen Informationen. Weitere Teilbereiche 24 lassen sich optional auswählen, insbesondere im Nahbereich der optischen Sensoreinrichtung, insbesondere einer Kamera.

In einem weiteren Schritt S4 erfolgt ein Ermitteln des optischen Flusses 32. Der optische Fluss 32 kann insbesondere entweder im gesamten ausgewählten Bereich 23 oder nur in einem oder mehreren der ausgewählten Teilbereichen 24 in den zumindest zwei Bildern 102 ausgewertet werden.

In einem weiteren Schritt S5 erfolgt ein Ermitteln der zurückgelegten Wegstrecke 30 anhand des ermittelten optischen Flusses, und insbesondere der Kamerahöhe und deren Brennweite.

Zusammenfassend weist zumindest eine der Ausführungsformen zumindest einen der folgenden Vorteile auf:

- Aufwändige Identifikation von Störungen im Messsignal zur Wegstreckenmessung entfällt.
- Kostengünstige Implementierung.
- Einfache Implementierung.
- Hohe Zuverlässigkeit.
- Robustheit.

**Patentansprüche**

1. Verfahren zur Wegstreckenmessung, umfassend die Schritte

   - Aufnehmen (S1) von zumindest zwei zeitlich sequentiellen Bildern (100) mittels einer berührungslos sensierenden Sensoreinrichtung (2, 2a),
   - Zuordnen (S2) von semantischen Informationen (21, 22, 23) zu zumindest einem Bildbereich (20) in den zumindest zwei Bildern, wobei das Zuordnen (S2) von semantischen Informationen zu verschiedenen Bildbereichen mittels eines künstlichen neuronalen Netzes (3) erfolgt,
   - Auswählen (S3) zumindest eines Teilbereichs (24) in einem oder mehreren Bildbereichen der zumindest zwei Bilder (101), der für eine Wegstreckenermittlung geeignet ist, anhand der zugeordneten semantischen Informationen, wobei der zumindest eine Teilbereich (24) ausgewählt wird, der eine Bodenebene in den Bildern (102) zeigt,
   - Ermitteln (S4) des optischen Flusses (32) anhand des zumindest einen ausgewählten Teilbereichs (24) in den zumindest zwei Bildern (102), und
   - Ermitteln (S5) der zurückgelegten Wegstrecke (30) anhand des ermittelten optischen Flusses, wobei die zurückgelegte Wegstrecke (30) anhand einer Höhe (43) der berührungslos sensierenden Sensoreinrichtung (2, 2a) über der Bodenebene (42), des ermittelten optischen Flusses (32) und anhand der Brennweite (40a) der berührungslos sensierenden Sensoreinrichtung (2, 2a) ermittelt wird.

**2.** Verfahren gemäß Anspruch 1, wobei zum Ermitteln (S4) des optischen Flusses (32) mehrere Teilbereiche (24) verwendet werden.

**3.** Verfahren gemäß einem der Ansprüche 1 oder 2, wobei das Bereitstellen der aufgenommenen Bilder (100) digital erfolgt und wobei das Zuordnen (S2) der semantischen Informationen bereichsweise, vorzugsweise pixelgenau, erfolgt.

**4.** Verfahren gemäß einem der Ansprüche 1 bis 3, wobei die berührungslos sensierende Sensoreinrichtung (2, 2a) mit einer Kamera (2a) bereitgestellt wird.

**5.** System (1) zur Wegstreckenmessung, umfassend

- eine berührungslos sensierende Sensoreinrichtung (2, 2a) zum Aufnehmen von zumindest zwei zeitlich sequentiellen Bildern (100), wobei die berührungslos sensierende Sensoreinrichtung (2, 2a) zumindest eine Kamera (2a) umfasst,
- eine Semantikeinheit (3) zum Zuordnen von semantischen Informationen (21, 22, 23) zu zumindest einem Bildbereich in den zumindest zwei Bildern (100), wobei die Semantikeinheit (3) ein künstliches neuronales Netz aufweist, wobei das Zuordnen von semantischen Informationen zu verschiedenen Bildbereichen mittels des künstlichen neuronalen Netzes (3) erfolgt,
- eine Selektionseinheit (5) zum Auswählen zumindest eines Teilbereichs (24) in einem oder mehreren Bildbereichen der zumindest zwei Bilder, der für eine Wegstreckenermittlung geeignet ist, anhand der zugeordneten semantischen Informationen, wobei der zumindest eine Teilbereich (24) ausgewählt wird, der eine Bodenebene in den Bildern (102) zeigt,
- eine Flusseinheit (4, 6) zum Ermitteln des optischen Flusses (32) anhand des zumindest einen ausgewählten Teilbereichs (24) in den zumindest zwei Bildern, und
- eine Wegmesseinheit (7) zum Ermitteln der zurückgelegten Wegstrecke (30) anhand des ermittelten optischen Flusses, wobei die zurückgelegte Wegstrecke (30) anhand einer Höhe (43) der berührungslos sensierenden Sensoreinrichtung (2, 2a) über der Bodenebene (42), des ermittelten optischen Flusses (32) und anhand der Brennweite (40a) der berührungslos sensierenden Sensoreinrichtung (2, 2a) ermittelt wird.

**6.** System gemäß Anspruch 5, wobei die berührungslos sensierende Sensoreinrichtung (2, 2a) eine Nahfeld-Digitalkamera umfasst.

**7.** System gemäß einem der Ansprüche 5 oder 6, wobei die Semantikeinheit (3) ein faltendes neuronales Netz aufweist.

**Claims**

**1.** Method for measuring distance, comprising the following steps:

- Capture (S1) of at least two temporally sequential images (100) by means of a contactless sensor device (2, 2a);
- Assignment (S2) of semantic information (21, 22, 23) to at least one image region (20) in the at least two images, wherein the assignment (S2) of semantic information to various image regions is executed by means of an artificial neural network (3) ;
- Selection (S3) of at least one subregion (24) in one or more image regions of the at least two images (101) which is appropriate for the determination of distance, by reference to the assigned semantic information, wherein the at least one subregion (24) selected shows a ground plane in the images (102);
- Determination (S4) of an optical flux (32) by reference to the at least one selected subregion (24) in the at least two images (102); and
- Determination (S5) of the distance (30) completed by reference to the optical flux thus determined, wherein the distance completed (30) is determined by reference to a height (43) of the contactless sensor device (2, 2a) above a ground plane (42), the optical flux (32) determined and the focal length (40a) of the contactless sensor device (2, 2a) .

**2.** Method according to Claim 1, wherein a plurality of subregions (24) are employed for determining (S4) the optical flux (32) .

**3.** Method according to one of Claims 1 or 2, wherein images captured (100) are delivered in a digital form, and wherein the assignment (S2) of semantic information is executed region-by-region, preferably in a pixel-accurate manner.

**4.** Method according to one of Claims 1 to 3, wherein the contactless sensor device (2, 2a) is provided in the form of a camera (2a).

**5.** System (1) for measuring distance, comprising:

- a contactless sensor device (2, 2a) for the capture of at least two temporally sequential images (100), wherein the contactless sensor device (2, 2a) comprises at least one camera (2a),

- a semantic unit (3) for the assignment of semantic information (21, 22, 23) to at least one image region in the at least two images (100), wherein the semantic unit (3) comprises an artificial neural network, and wherein the assignment of semantic information to various image regions is executed by means of the artificial neural network (3),
- a selection unit (5) for the selection of at least one subregion (24) in the image regions of the at least two images which is appropriate for determining distance, by reference to the assigned semantic information, wherein the at least one subregion (24) selected shows a ground plane in the images (102),
- a flux unit (4, 6) for determining the optical flux (32) by reference to the at least one selected subregion (24) in the at least two images, and
- a distance measurement unit (7) for determining the distance completed (30) by reference to the optical flux thus determined, wherein the distance (30) completed is determined by reference to a height (43) of the contactless sensor device (2, 2a) above a ground plane (42), the optical flux (32) determined and the focal length (40a) of the contactless sensor device (2, 2a).

6. System according to Claim 5, wherein the contactless sensor device (2, 2a) comprises a near-field digital camera.

7. System according to one of Claims 5 or 6, wherein the semantic unit (3) comprises a layer-folded neural network.

**Revendications**

1. Procédé de mesure d'itinéraire, comprenant les étapes suivantes

   - enregistrement (S1) d'au moins deux images (100) séquentielles dans le temps au moyen d'un dispositif capteur (2, 2a) à détection sans contact,
   - affectation (S2) d'informations sémantiques (21, 22, 23) à au moins une zone d'image (20) dans les au moins deux images, l'affectation (S2) d'informations sémantiques à différentes zones d'image s'effectuant au moyen d'un réseau neuronal artificiel (3),
   - sélection (S3) d'au moins une zone partielle (24) dans une ou plusieurs zones d'image des au moins deux images (101), laquelle est appropriée pour une détermination d'itinéraire, à l'aide des informations sémantiques affectées, l'au moins une zone partielle (24) étant sélectionnée qui représente un plan de sol dans les images (102),
   - détermination (S4) du flux optique (32) à l'aide de l'au moins une zone partielle (24) sélectionnée dans les au moins deux images (102), et
   - détermination (S5) de l'itinéraire parcouru (30) à l'aide du flux optique déterminé, l'itinéraire parcouru (30) étant déterminé à l'aide d'une hauteur (43) du dispositif capteur (2, 2a) à détection sans contact au-dessus du plan de sol (42), du flux optique (32) déterminé et à l'aide de la distance focale (40a) du dispositif capteur (2, 2a) à détection sans contact.

2. Procédé selon la revendication 1, plusieurs zones partielles (24) étant utilisées pour la détermination (S4) du flux optique (32).

3. Procédé selon l'une des revendications 1 ou 2, la fourniture des images (100) enregistrées s'effectuant sous forme numérique et l'affectation (S2) des informations sémantiques s'effectuant par zone, de préférence avec une précision au pixel.

4. Procédé selon l'une des revendications 1 à 3, le dispositif capteur (2, 2a) à détection sans contact étant fourni avec une caméra (2a).

5. Système de mesure d'itinéraire, comprenant

   - un dispositif capteur (2, 2a) à détection sans contact destiné à enregistrer au moins deux images (100) séquentielles dans le temps, le dispositif capteur (2, 2a) à détection sans contact comprenant au moins une caméra (2a),
   - une unité sémantique (3) destinée à affecter des informations sémantiques (21, 22, 23) à au moins une zone d'image (20) dans les au moins deux images (100), l'unité sémantique (3) possédant un réseau neuronal artificiel (3), l'affectation d'informations sémantiques à différentes zones d'image s'effectuant au moyen du réseau neuronal artificiel (3),
   - une unité de sélection (5) destinée à sélectionner au moins une zone partielle (24) dans une ou plusieurs zones d'image des au moins deux images, laquelle est appropriée pour une détermination d'itinéraire, à l'aide des informations sémantiques affectées, l'au moins une zone partielle (24) étant sélectionnée qui représente un plan de sol dans les images (102),
   - une unité de flux (4, 6) destinée à déterminer le flux optique (32) à l'aide de l'au moins une zone partielle (24) sélectionnée dans les au moins deux images, et
   - une unité de mesure de course (7) destinée à déterminer l'itinéraire parcouru (30) à l'aide du flux optique déterminé, l'itinéraire parcouru (30) étant déterminé à l'aide d'une hauteur (43) du dispositif capteur (2, 2a) à détection sans contact au-dessus du plan de sol (42), du flux optique (32) déterminé et à l'aide de la distance focale (40a) du dispositif capteur (2, 2a) à détection sans contact.

6. Système selon la revendication 5, le dispositif capteur (2, 2a) à détection sans contact comprenant une caméra numérique à champ proche.

7. Système selon l'une des revendications 5 ou 6, l'unité sémantique (3) comprenant un réseau neuronal convolutif.

FIG. 1

**FIG. 2**

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016223435 A1
- EP 3040726 A1
- WO 2012168424 A1
- WO 2006063546 A1
- WO 2007091072 A1